# EUROPEAN PATENT SPECIFICATION

(11) **EP 2 861 776 B1**
(45) Date of publication and mention of the grant of the patent: **17.08.2016**
(21) Application number: 13734897.5
(22) Date of filing: 19.06.2013
(51) Int. Cl.: C23C 4/08, C23C 4/12, C23C 4/18, B23P 6/00

(54) **REMANUFACTURED COMPONENT AND FEALSIC THERMAL SPRAY WIRE FOR SAME**
WIEDERHERGESTELLTE KOMPONENTE UND FEALSIC-DRAHT FÜR THERMISCHES SPRITZEN DAFÜR
COMPOSANT RECONSTRUIT ET FIL POUR PROJECTION THERMIQUE DE FEALSIC POUR CELUI-CI

(30) Priority: 19.06.2012 US 201213526976
(43) Date of publication of application: 22.04.2015
(73) Proprietor: Caterpillar Inc., Peoria, IL 61629-9510 (US)
(72) Inventor: SHARP, Robert, Eugene, Corinth, MS 38834 (US); LUICK, Kegan, Jon, Peoria, IL 61629-9510 (US); BEARDSLEY, M., Brad, Laura, IL 61451 (US); SCHIPULL, Kristin, Ann, Moorhead, MN 56560 (US); SORDELET, Daniel, Joseph, Peoria, IL 61615 (US); MOSS, Jarrod, David, Corinth, MS 38834 (US); VELIZ, Mark, David, Metamora, IL 61548 (US)
(74) Representative: Wagner & Geyer
(86) International application number: PCT/US2013/046579
(87) International publication number: WO 2013/192309

(56) References cited:
- US-A- 4 878 953
- US-A- 5 380 564
- US-A- 5 691 004
- US-A- 5 915 743
- SULZER METCO: "Werkstoffe für das Thermische Spritzen", , May 2012 (2012-05), pages 1-52, XP002713748, Retrieved from the Internet: URL:http://www.sulzer.com/de/-/media/Docum ents/ProductsAndServices/Coating_Materials /Thermal_Spray/Brochures/TS_MaterialGuide_ EN_052012.pdf [retrieved on 2013-09-25]
- SULZER METCO: "Material Product Data Sheet: Iron-based Alloy Cored Thermal Spray Wire", , 11 February 2012 (2012-02-11), pages 1-3, XP002713749, Retrieved from the Internet: URL:http://www.sulzer.com/en/-/media/Docum ents/ProductsAndServices/Coating_Materials /Thermal_Spray/ProductInformation/Wires_Ir on_Base/DSMTS_0069_0_FeAlC_Cored_Wire.pdf [retrieved on 2013-09-25]
- SULZER METCO: "Material Product Data Sheet: Iron based, High Chromium (Cr > 20%) Thermal Spray Wires", , pages 1-4, XP002713751, Retrieved from the Internet: URL:http://www.sulzer.com/en/-/media/Docum ents/ProductsAndServices/Coating_Materials /Thermal_Spray/ProductInformation/Wires_Ir on_Base/DSMTS_0008_3_Fe_High_Cr_Wire.pdf [retrieved on 2013-09-25]

## Description

### Technical Field

The present disclosure relates generally to remanufactured components, and more particularly to a FeAlSiC thermal spray coating that is millable and oxidation resistant at about 700° C.

### Background

Because manufacturing new components can be extremely expensive, engineers are constantly seeking ways to refurbish or remanufacture used components to match technical and dimensional specifications for the component as new. For instance, in the engine industry there is a continuous effort to find new and more economical ways to remanufacture components, such as engine blocks and engine heads. Remanufacturing metallic components often requires adding material to the used body to build up a surface that no longer satisfies a dimensional specification for the component. For instance, in the case of an engine block, the distance between the head face and a centerline of a crank shaft support bore may have slightly decreased over the life of the used block. Therefore, in order to remanufacture the engine block, the head face needs to have material added, and then the treated component often needs to be reshaped by removing some of the added material to return all dimensions to specification. While there exists many different techniques for remanufacturing a component, the newly added material often also must exhibit characteristics that match or exceed the metallic material of the original component. For instance, in the case of an engine head or engine block, the added material must successfully undergo many cycles of being heated from ambient temperature to combustion temperatures on the order of about 700° C, be exposed to corrosive gases, and do so without degradation on par with the base metallic material, which may be steel or cast iron. Apart from these considerations, cost of the added material can be a constraint as well as the ability of the added material to be shaped economically back into specification. Thus, finding a technique to add the material, and finding an appropriate metallic material for addition in a remanufacturing procedure while satisfying many different and often conflicting constraints, including cost, can be extremely elusive.

The present disclosure is directed toward one or more of the problems set forth above.

### Summary

In one aspect, a remanufactured component includes a body having a first shape resulting from use of the component. The first shape is defined by a first metallic material and has at least one dimension that does not match a dimensional specification for the component. A coating of a second metallic material is adhered to and covers at least a portion of the first metallic material on the body and has a milled external surface. The second metallic material comprises FeAlSiC and has a millable, predominantly ordered D03 crystal structure with a substantially stable aluminum oxide scale that produces oxidation resistance at about 700° C. The body and the coating have a second shape that substantially matches the dimensional specification for the component.

In another aspect, a thermal spray wire includes a coil of FeAlSiC wire shaped and sized to be compatible with a wire arc thermal spray machine. The wire has 6-8% aluminum, 2.2-4.2% silicon, 1.6-2.4% carbon, and a remaining balance of iron.

In still another aspect, a method of remanufacturing a component includes identifying a dimension of a body that does not match a dimensional specification for the component. The body has a first shape resulting from use of the component, and is defined by a first metallic material. A second metallic material is thermal spray coated onto the body to build up the dimension beyond the dimensional specification for the component. The second metallic material is comprised of FeAlSiC. A portion of the second metallic material is milled away until the coating and the body have a second shape that substantially matches the dimensional specification of the component. The coating has a predominantly ordered D03 crystal structure with a substantially stable aluminum oxide scale that produces oxidation resistance at about 700° C.

### Brief Description of the Drawings

Fig. 1 is a partially sectioned side view of a remanufactured engine block according to one aspect of the present disclosure;
Fig. 2 is a partially sectioned side view of a remanufactured engine head according to another aspect of the present disclosure;
Figure 3 is a side schematic view a wire arc thermal spray machine in operation; and
Figure 4 is a computed isothermal section at 600° C for aluminum-iron-silicon.

### Detailed Description

There are many different components, particularly engine components, that can be remanufactured and returned to service for a second useful life that may even exceed the useful life of a newly manufacture component. A used component will typically have a uniform body with a first shape resulting from use of the component. Those skilled in the art will appreciate that the dimensional specification for a component is often identified in an engineering drawing that typically specifies materials, surface finishes, a plurality of dimensions, and often tolerances about those dimensions and other specifications known in the art. Depending upon the component, the first shape of the body of the component resulting from use may be attributed to at least one of wear and/or degradation, and removal of additional material from the body in order to properly prepare a surface for remanufacturing. For instance, it might be desirable to remove some of the original first metallic material so that the resulting coating, after being milled, has some minimum thickness. In any event, the shape of the body will include at least one dimension that does not match the dimensional specification for the component. Parts that may be subject to remanufacture include, but are not limited to, engine heads, engine blocks, shafts, oil coolers, pump/turbo/engine housings, covers, intake/exhaust fittings and many others.

In one specific example, current remanufacturing strategies for a cylinder head or block may utilize 420 stainless steel to build up the body that is worn or machined out of dimensional specifications. While such a strategy has worked well, environmental and other concerns have motivated the industry to adopt remanufacturing materials that avoid, limit or reduce the use of chromium or nickel. Although not necessarily true for all components subject to remanufacture, engine heads and blocks, for instance, should be able to exhibit good oxidation resistance at about 700° C. The term "about" means a number rounded to the nearest significant digit. Thus, 749° C is about 700° C, but 760° C is not about 700° C.

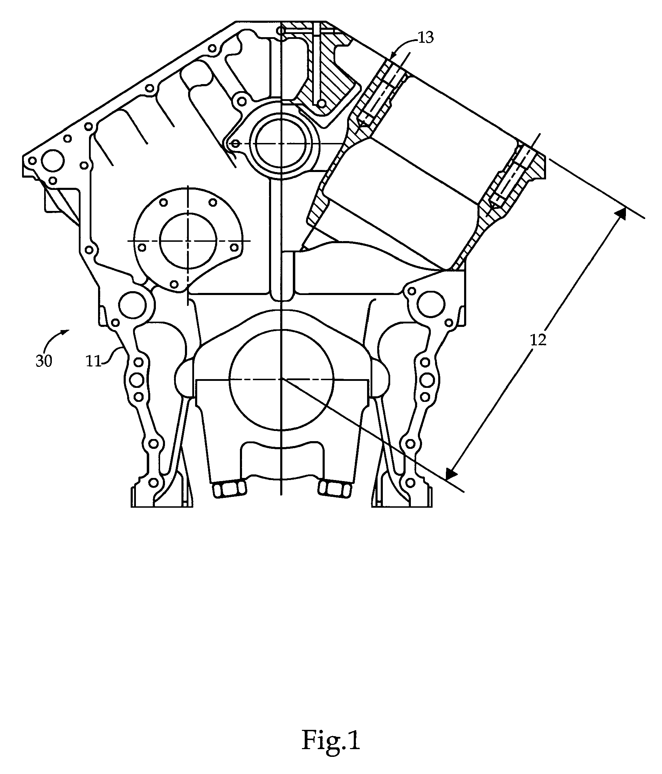

Referring to Figure 1, an engine block 30 includes a body 11 with a first shape resulting from use of the engine block, and has at least one dimension 12 that does not match a dimensional specification for the engine block. Dimension 12 may be less than the required dimensional specification due to any number of reasons known in the art including oxidation loss, machining necessary to prepare the block surface for adding additional materials, and any other reasons known in the art. In the illustrated embodiment, dimension 12 relates to the distance between the head face and the centerline of a crank shaft support bore through block 30. Body 11 may typically be a casting, such as an iron casting, but may also be made from other metallic materials including aluminum or steel without departing from the scope of the present disclosure. During remanufacture, a coating 13 of a second metallic material is thermal spray coated to adhere to and cover at least a portion of the first metallic material on body 11. The second metallic material should be millable so that the coating process adds an excess of material that is then milled away to dimension. After the remanufacture process, the body 11 and the coating 13 will have a second shape that substantially matches the dimensional specification for the engine block.

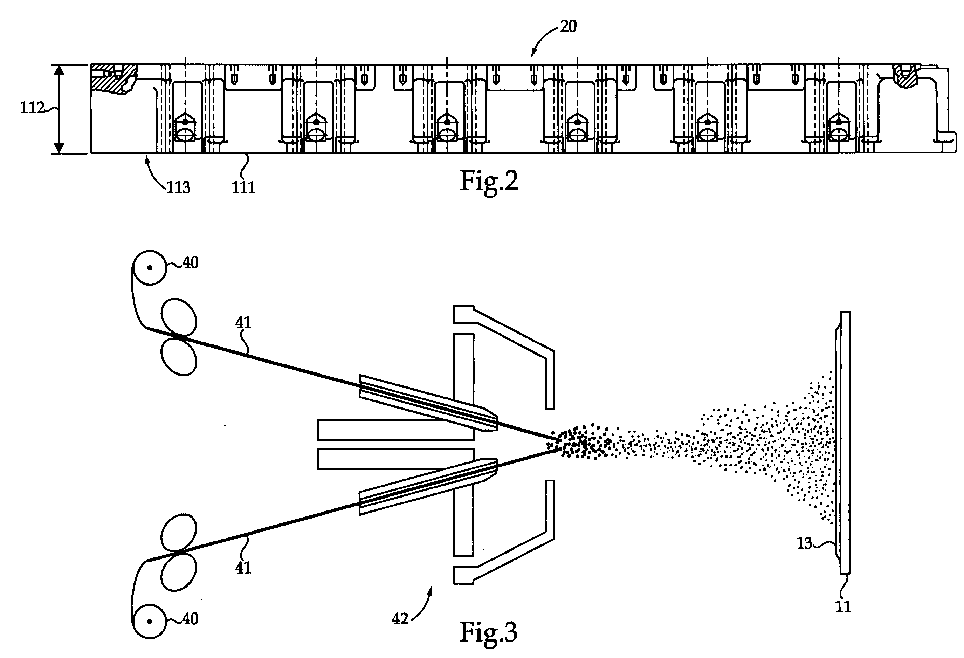

Referring to Figure 2, a second example component 20 is an engine head that includes a body 111 with a dimension 112 that does not match a dimensional specification for the engine head due to its shape resulting from use. Engine head 20, like engine block 30 may be made from any suitable first metallic material, such as an iron casting. A coating 113 of a second metallic material is adhered to and covers at least a portion of the first metallic material on body 11 and has a milled external surface. Thus, the remanufacturing strategy of the present disclosure teaches the addition of an excess amount of the second metallic material that is millable so that the body and coating can be milled to a second shape that substantially matches the dimensional specification for the engine head. As used in the present disclosure, the terms mill or millable mean a machine technique other than grinding. Components that may be milled may typically be brought to shape in a single pass with a suitable rotating cutting tool or the like, whereas grinding can often require prolonged and repeated contact between a grinding surface and a part to be ground, which can increase costs and extend processing time, while maybe also reducing certainty in quickly arriving at a final dimensional shape.

The present disclosure teaches applying the second metallic material in a thermal spray coating strategy, such as utilizing a twin wire arc thermal spray technique of a type well known in the art. For example, Fig. 3 shows a twin or dual wire arc thermal spray machine 42 that draws wire 41 from two spools 40, and feeds those wires 41 continuously in front of a spray of a suitable gas while an arc between the two wires creates a molten metallic material that is projected toward the work piece as a stream of atomized particles by the spray. These particles then adhere to the underlying body 11 in a coating 13.

Rather than stainless steel as a remanufacture second metallic material, the present disclosure teaches the use of FeAlSiC wire in the dual wire arc thermal spray machine of Figure 3. By properly selecting the ratios of iron, aluminum, and silicon, the coating 13, 113 will be millable, and have a predominantly ordered DO3 crystal structure with a substantially stable aluminum oxide scale that produces oxidation resistance at about 700° C. The term "stable aluminum oxide scale", in the context of an engine head 20 or engine pump 30 means that the coating can undergo at least 100 cycles of being heated from ambient temperature up to about 700° C without any substantial weight loss of the coating. For instance, one of these temperature cycles may relate to the engine going from a cold start to a normal operating condition and then returning to ambient condition after being shut down.

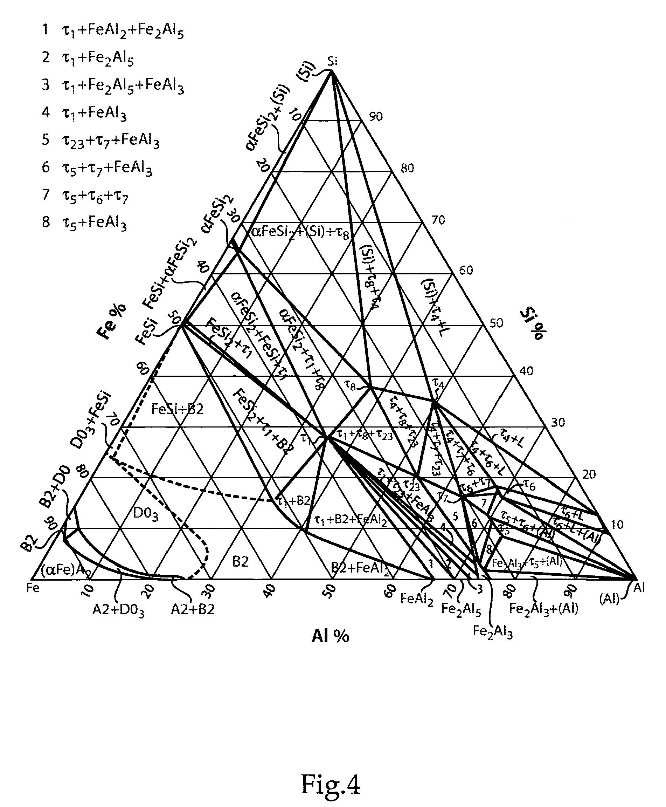

One specific recipe for a FeAlSiC wire suitable for use in remanufacturing engine heads 20 and engine blocks 30 that has worked well includes 6-8% aluminum, 2.2-4.2% silicon, 1.6-2.4% carbon and a remaining balance of iron. Nevertheless, there are other combinations of these elements that will exhibit the ordered DO3 crystal structure that yields a millable metallic material with a stable aluminum oxide scale. Figure 4 shows a computed isothermal section at 600° C for percentages of iron, silicon and aluminum, with the region that exhibits an ordered DO3 crystal structure being located in the lower left of the computed isothermal section. Those skilled in the art will appreciate that Figure 4 shows a computed diagram, and the actual materials may exhibit or yield different data if an actual diagram of the type shown in Figure 4 were created experimentally. Thus, those skilled in the art will appreciate that the predominantly ordered DO3 crystal structure region shown in the diagram of Figure 4 may have borderlines that differ to some extent from the computed isothermal region predicted by Figure 4.

The diagram of Figure 4 suggests that an exact numerical range for aluminum and silicon in an FeAlSiC wire may not be realistically possible. However, those skilled in the art will appreciate that the specific ratios of those materials should exhibit the predominantly ordered DO3 crystal structure and have a substantially stable aluminum oxide scale that produces oxidation resistance at about 700° C in order to be suitable as a thermal spray coating according to the present disclosure. If one chooses a combination of iron, aluminum and silicon that strays too far from the ordered DO3 crystal structure region shown in Figure 4, one might expect an increasing amount of disordered alpha structure that would yield unsuitable results. It is believed that an appropriate aluminum to silicon ratio helps to accelerate the desired DO3 crystal formation of an exclusive aluminum oxide scale. It is suspected that the small amount of carbon leads to a somewhat higher hardness in the coating, maybe making it more millable. This renders the coating 13, 113 desirable for applications in remanufacturing components such as engine heads 20 and engine blocks 30. It is believed that the small amount of silicon reduces the amount of aluminum that is required for good oxidation resistance. This appears to be a synergistic effect. In general, it may be desirable to have the aluminum to silicon ratio to be lower than one.

Referring again to Fig. 3, the FeAlSiC wire 41 may come in a coil 40 that is shaped and sized to be compatible with the wire arc thermal spray machine 42. The wire may be a solid wire, or a cored wire of a type known in the art without departing from the present disclosure.

### Industrial Applicability

The present disclosure finds potential applicability in any remanufacture strategy where there is a desire to at least one of reduce cost of the coating material, reduce cost or improve efficiency with regard to the application and machining of the coating, and finally maybe an environmental desire to avoid or reduce usage of chromium. The present disclosure finds specific application in substituting the FeAlSiC coating of the present disclosure in place of maybe the stainless steel used in the past to remanufacture engine components, such as engine heads and engine blocks.

As part of the remanufacture process, one might identify a dimension 12 or 112 (Fig. 1 and Fig. 2) that does not match the dimensional specification for the component. A thermal spray coating of the FeAlSiC metallic material is spray coated onto the body 11, 111 to build up the dimension 12, 112 beyond the dimensional specification for the component. Next, a portion of the coating is milled away until the coating 13, 113 and the body 11, 111 have a second shape that substantially matches the dimensional specification for the component. Prior to undergoing the thermal spraying process, it may be desirable to apply masking to features of the original component to avoid additional processing after the thermal spray is completed. After the thermal spray coating process, any masking may be removed, and the combined body and coating are milled to a second shape that matches the dimensional specification for the component. Thereafter, the component may be returned to use for a second useful life, and might even be remanufactured again for a second time at a later date.

It should be understood that the above description is intended for illustrative purposes only, and is not intended to limit the scope of the present disclosure in any way. Thus, those skilled in the art will appreciate that other aspects of the disclosure can be obtained from a study of the drawings, the disclosure and the appended claims.

## Claims

1. A remanufactured component (10, 110) comprising:
a body (11, 111) having a first shape resulting from use of the component, the first shape being defined by a first metallic material and having at least one dimension (12, 112) that does not match a dimensional specification for the component;
a coating (13, 113) of a second metallic material, the second material comprising FeAlSiC and having a millable, predominantly ordered DO3 crystal structure with a substantially stable aluminum oxide scale that produces oxidation resistance at about 700°C, and the coating (13, 113) being adhered to and covering at least a portion of the first metallic material on the body (11, 111) and having a milled external surface; and
the body (11, 111) and the coating (13, 113) having a second shape that substantially matches the dimensional specification for the component.

2. The remanufactured engine component of claim 1 wherein the second material has 6 to 8% aluminum, 2.2 to 4.2% silicon, 1.6 to 2.4% carbon, and a remaining balance of iron.

3. The remanufactured engine component of claim 2 wherein the first metallic material is a casting.

4. The remanufactured engine component of claim 3 wherein the casting is an iron casting.

5. A thermal spray wire comprising:
a coil (40) of FeAlSiC wire (41) shaped and sized to be compatible with a wire arc thermal spray machine (42); and
wherein the wire has 6 to 8% aluminum, 2.2 to 4.2% silicon, 1.6 to 2.4% carbon, and a remaining balance of iron.

6. The thermal spray wire of claim 5 wherein the wire is a cored wire.

7. The thermal spray wire of claim 5 wherein the wire is a solid wire.

8. A method of remanufacturing a component comprising the steps of:
identifying a dimension (12, 112) of a body (11, 111), which has a first shape resulting from use of the component, that does not match a dimensional specification for the component, wherein the first shape being defined by a first metallic material;
thermal spray coating (13, 113) a second metallic material, which is comprised of FeAlSiC, onto the body (11, 111) to build up the dimension (12, 112) beyond the dimensional specification for the component;
milling away a portion of the second metallic material until the coating (13, 113) and the body (11, 111) have a second shape that substantially matches the dimensional specification of the component
wherein the coating (13, 113) has a predominantly ordered DO3 crystal structure with a substantially stable aluminum oxide scale that produces oxidation resistance at about 700°C.

9. The method of claim 8 wherein the second metallic material has 6 to 8% aluminum, 2.2 to 4.2% silicon, 1.6 to 2.4% carbon, and a remaining balance of iron.

10. The method of claim 9 wherein the first metallic material is a casting.

## Patentansprüche

1. Wiederaufgearbeitete Komponente (10, 110), die Folgendes aufweist:
einen Körper (11, 111), der eine erste Form hat, welche das Ergebnis einer Verwendung der Komponente ist, wobei die erste Form durch ein erstes Metallmaterial definiert wird und zumindest eine Abmessung (12, 112) hat, die nicht mit einer Abmessungsspezifikation für diese Komponente übereinstimmt;
eine Beschichtung (13, 113) aus einem zweiten Metallmaterial, wobei das zweite Metallmaterial FeAlSiC aufweist, und eine fräsbare vorherrschend geordnete DO3-Kristallstruktur bzw. vorherrschend DO₃-geordnete Kristallstruktur mit einer im Wesentlichen stabilen Aluminiumoxidschicht hat, welche eine Oxidationsbeständigkeit bei ungefähr 700°C erzeugt, und wobei die Beschichtung (13, 113) an zumindest einem Teil des ersten Metallmaterials am Körper (11, 111) anhaftet und diesen bedeckt und eine gefräste Außenfläche hat; und
wobei der Körper (11, 111) und die Beschichtung (13, 113) eine zweite Form haben, die im Wesentlichen mit der Abmessungsspezifikation für die Komponente übereinstimmt.

2. Wiederaufgearbeitete Motorkomponente nach Anspruch 1, wobei das zweite Material 6 bis 8 % Aluminium, 2,2 bis 4,2 % Silizium, 1,6 bis 2,4 % Kohlenstoff und als Rest Eisen hat.

3. Wiederaufgearbeitete Motorkomponente nach Anspruch 2, wobei das erste Metallmaterial ein Gussstück ist.

4. Wiederaufgearbeitete Motorkomponente nach Anspruch 3, wobei das Gussstück ein Eisengussstück ist.

5. Draht zum thermischen Spritzen, der Folgendes aufweist:
eine Spule (40) eines FeAlSiC-Drahtes (41), der so geformt und bemessen ist, dass er mit einer Spritzmaschine (42) für thermisches Lichtbogenspritzen kompatibel ist; und
wobei der Draht 6 bis 8 % Aluminium, 2,2 bis 4,2 % Silizium, 1,6 bis 2,4 % Kohlenstoff und als Rest Eisen hat.

6. Draht zum thermischen Spritzen nach Anspruch 5, wobei der Draht ein mit Kern versehener Draht ist.

7. Draht zum thermischen Spritzen nach Anspruch 5, wobei der Draht ein voller Draht ist.

8. Verfahren zum Wiederaufarbeiten einer Komponente, welches folgende Schritte aufweist:
Identifizieren einer Abmessung (12, 112) eines Körpers (11, 111), der eine erste Form hat, die das Ergebnis einer Verwendung der Komponente ist, die nicht mit einer Abmessungsspezifikation für die Komponente übereinstimmt, wobei die erste Form durch ein erstes Metallmaterial definiert wird;
Aufbringen einer Beschichtung (13, 113) eines zweiten Metallmaterials, welches aus FeAlSiC besteht, durch thermisches Spritzen auf dem Körper (11, 111), um die Abmessung (12, 112) über die Abmessungsspezifikation für die Komponente hinaus aufzubauen;
Abfräsen eines Teils des zweiten Metallmaterials bis die Beschichtung (13, 113) und der Körper (11, 111) eine zweite Form haben, die im Wesentlichen mit der Abmessungsspezifikation der Komponente übereinstimmt;
wobei die Beschichtung (13, 113) eine vorherrschend geordnete DO3-Kristallstruktur bzw. vorherrschend DO₃-geordnete Kristallstruktur mit einer im Wesentlichen stabilen Aluminiumoxidschicht hat, die eine Oxidationsbeständigkeit bei 700°C erzeugt.

9. Verfahren nach Anspruch 8, wobei das zweite Metallmaterial 6 bis 8 % Aluminium, 2,2 bis 4,2 % Silizium, 1,6 bis 2,4 % Kohlenstoff und als Rest Eisen hat.

10. Verfahren nach Anspruch 9, wobei das erste Metallmaterial ein Gussteil ist.

## Revendications

1. Composant reconstruit (10, 110) comprenant :
un corps (11, 111) ayant une première forme résultant de l'utilisation du composant, la première forme étant définie par un premier matériau métallique et ayant au moins une dimension (12, 112) qui ne concorde pas avec une spécification dimensionnelle pour le composant ;
un revêtement (13, 113) en un deuxième matériau métallique, le deuxième matériau métallique comprenant du FeAlSiC et ayant une structure cristalline ordonnée DO3 de façon prédominante, pouvant être fraisée, avec une couche d'oxyde d'aluminium sensiblement stable qui procure une résistance à l'oxydation à environ 700 °C, et le revêtement (13, 113) étant adhérent et couvrant au moins une partie du premier matériau métallique sur le corps (11, 111) et ayant une surface externe fraisée ; et
le corps (11, 111) et le revêtement (13, 113) ayant une deuxième forme qui concorde sensiblement avec la spécification dimensionnelle pour le composant.

2. Composant de moteur reconstruit selon la revendication 1, dans lequel le deuxième matériau comporte 6 à 8 % d'aluminium, 2,2 à 4,2 % de silicium, 1,6 à 2,4 % de carbone, et le reste est du fer.

3. Composant de moteur reconstruit selon la revendication 2, dans lequel le premier matériau métallique est une pièce de fonderie.

4. Composant de moteur reconstruit selon la revendication 3, dans lequel la pièce de fonderie est en fonte de fer.

5. Fil de projection thermique comprenant :
un enroulement (40) en fil de FeAlSiC (41) ayant une forme et une taille permettant d'être compatible avec une machine de projection thermique par arc électrique à fil (42) ; et
dans lequel le fil comporte 6 à 8 % d'aluminium, 2,2 à 4,2 % de silicium, 1,6 à 2,4 % de carbone, et le reste est du fer.

6. Fil de projection thermique selon la revendication 5, dans lequel le fil est un fil fourré.

7. Fil de projection thermique selon la revendication 5, dans lequel le fil est un fil massif.

8. Procédé de re-fabrication de composant comprenant les étapes suivantes :
identifier une dimension (12, 112) d'un corps (11, 111), qui a une première forme résultant de l'utilisation du composant, qui ne concorde pas avec une spécification dimensionnelle pour le composant, la première forme étant définie par un premier matériau métallique ;
déposer par projection thermique (13, 113) un deuxième matériau métallique, qui est constitué de FeAlSiC, sur le corps (11, 111) pour construire la dimension (12, 112) au-delà de la spécification dimensionnelle du composant ;
retirer par fraisage une portion du deuxième matériau métallique jusqu'à ce que le revêtement (13, 113) et le corps (11, 111) aient une deuxième forme qui concorde sensiblement avec la spécification dimensionnelle du composant,
dans lequel le revêtement (13, 113) a une structure cristalline ordonnée DO3 de façon prédominante avec une couche d'oxyde d'aluminium sensiblement stable qui procure une résistance à l'oxydation à environ 700 °C.

9. Procédé selon la revendication 8, dans lequel le deuxième matériau métallique comporte 6 à 8 % d'aluminium, 2,2 à 4,2 % de silicium, 1,6 à 2,4 % dé carbone, et le reste est du fer.

10. Procédé selon la revendication 9, dans lequel le premier matériau métallique est une pièce de fonderie.
